# EUROPEAN PATENT APPLICATION

(11) **EP 0 771 774 A2**
(43) Date of publication of application: **07.05.1997**
(21) Application number: 97200001.2
(22) Date of filing: 31.01.1992
(51) Int. Cl.: C05C 9/00, C05B 17/00, C05D 9/02, C05G 3/00, C05G 5/00

(54) **Improved solubility compound fertilizer compositions**

(30) Priority: 31.01.1991 US 648644
(62) Divisional of application: 92905776.8
(71) Applicant: OMS INVESTMENTS, Inc., Wilmington, Delaware 19801 (US)
(72) Inventor: Vetanovetz, Richard P., Emmaus, PA 18049 (US); Peters, Robert, Allentown, PA 18104 (US)
(74) Representative: De Hoop, Eric

(57) **Abstract**

A solid complex fertiliser for dissolving in water to give a water-based precipitate-free phosphorous and trace metal containing stock solution, the solid complex fertiliser comprising urea phosphate as the principal phosphorous source and nonchelated micro nutrient trace metal salt. Also disclosed is a water-based precipitate-free fertiliser concentrate comprising the solid complex fertiliser dissolved in water.

## Description

### Background of the Invention

### Field of the Invention

This invention concerns improved solid fertilizer compositions and in particular solid fertilizer compositions useful for preparing aqueous fertilizer solitions for precision plant nutrition.

### Prior Art

In greenhouses, nurseries and other intensive horticulture environments, best results are attained when macro- and micronutrients are carefully delivered to the growing plants. Many growers choose to utilize compound high analysis water-soluble fertilizers. Typically, these fertilizers are marketed as solids which are dissolved to prepare concentrated stock solutions which are then diluted into irrigation water by means of proportioners or injection devices.

The Grace Sierre Horticultural Products Company markets a wide range of water-soluble solid compound fertilizer formulations under the Peters Professional® trademark. These formulations are designed to dissolve quickly and completely with no precipitation. It is also desired that a fertilizer formulation have good longterm stability as a stock solution so as not to form precipitates which can clog proportioners and irrigation lines. This has led to a limitation with water-soluble fertilizer formulation available heretofore.

The use of chelated trace nutrients (micronutrients) has been widely postulated in order to keep these trace nutrients in solution in stock solutions which also contain the conventional phosphorous sources, monoammonium phosphate and diammonium phosphate. If nonchelated micronutrients (such as simple nitrates or sulfates) are employed with the conventional phosphorous sources, the micronutrients tend to precipitate from solution. These chelated micronutrients increase the cost of the fertilizer formulations.

The present invention employs urea phosphate in water-soluble solid fertilizer formulations. Urea phosphate is a known material. The text, Urea and Urea Phosphate Fertilizers by Clifford W. Fowler (Noyes Data Corporation, Park Ridge, New Jersey, 1976) at page 23, shows a process for preparing this material and suggests that it may be used as a fertilizer. Similarly, United States Patent No. 4 456 463 discloses the use of urea-phosphoric acid reaction products as ammonia-stabilized liquid components or fertilizers. Chemical Abstracts 106(3)101311q shows a liquid component for use in fertilizers which contains a urea phosphate polycondensation product. Chemical Abstracts 102(9)77486v also shows this. Other references of interest include Chemical Abstracts 101(23)209498s which concerns the biological fate of urea/phosphate fertilizers; Chemical Abstract 101(21)190398k which discusses the use of urea phosphate fertilizers; Chemical Abstracts 88(19135558a which describes the reaction of that phosphoric acid reacts with urea and with calcium salts; and Chemical Abstracts 86(11)70783g which deals with the development of liquid multicomponent fertilizers based on potassium and ammonium nitrates and diphosphates, urea, water and trace elements.

### Statement of the Invention

An improved solid fertilizer which dissolves completely in water to give a phosphorous-containing stock solution has now been found. This fertilizer is characterized by being a solid, by having urea phosphate as the principal phosphorous source, by containing nonchelated micronutrient trace metals such as iron, manganese, copper, boron, zinc and molybdenum and optionally magnesium and by dissolving completely in water without precipitate formation initially or upon prolonged standing, such as for 24 hours or longer.

This invention provides a trace metal-containing solid complex fertilizer which dissolves completely in water to give a water-based precipitate free stable aqueous stock solution, this solid fertilizer containing solid urea phosphate as the principal phosphorous source and nonchelated micronutrient trace metal nitrate or sulfate salts such as at least one of iron sulfate or nitrate, manganese sulfate or nitrate, copper sulfate or nitrate, and zinc sulfate or nitrate. This material may contain magnesium nitrate, as well.

In addition, this invention provides a method for preparing a stable water-based phosphorous-containing and trace metal containing fertilizer aqueous stock solution.
This method involves
obtaining a solid compound fertilizer admixture of urea phosphate as a primary phosphorous component and a nonchelated trace metal salt, and
mixing this admixture with water at a ratio predetermined to yield to a concentration of the admixture of 2 to 40% by weight and allowing the admixture to dissolve completely.

The inclusion of urea phosphate in a dry blended mixture of nutrient sources which include trace metals such as iron and the like and optionally magnesium in nonchelated forms such as nitrates and/or sulfates offers several advantages. For one, the urea phosphate establishes a low pH condition when the blended mixture is added to water to make a concentrated stock solution. A stock solution pH in the range of 0 to 2 may be achieved. This low solution pH maintains solubility and clarity of the concentrated stock solution. Urea phosphate, by the effect it has on solution pH, prevents the formation of magnesium phosphate and iron phosphate, which are not soluble. Therefore, when urea phosphate is used as a primary phosphorous source, it will make possible the inclusion of phosphorous and a metal such as magnesium or iron in one compound fertilizer, without the use of chelates or the disadvantage of a precipitate forming. This allows the end user to prepare and apply a complete nutrient solution using one stock solution and utilizing one injector. It also makes possible the inclusion of nonchelated trace nutrients into phosphorous-containing nutrient solutions without precipitation. It also allows the fertilizer solution to have an increased acidifying effect on the growing medium if needed. In summary, the advantages of using urea phosphate as a primary phosphate source in a solid compound fertilizer are:
a. The ability to purchase, prepare and apply a complete nutrient solution with one stock solution and one proportioner.
b. The ability to use nonchelated micronutrient trace elements without reduction in solubility in the stock solution as is observed using conventional dry phosphorous sources.
c. The ability to formulate acidic fertilizers that are sold as dry solids and thus are less hazardous to the end user than liquid phosphoric acid-based materials.

### DETAILED DESCRIPTION OF THE INVENTION

The fertilizer compositions of this invention are dry solid materials. This is defined to mean that they are particulate flowing solids having a water content of less than about 10% by weight total composition.

The fertilizer compositions of this invention contain urea phosphate 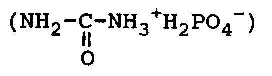 as a dry particulate solid. The amount of urea phosphate will vary depending upon the nitrogen and phosphorous analysis desired for the formulated composition. Typically, the urea phosphate is used in place of monoammonium phosphate or diammonium phosphate. Since urea phosphate contributes nitrogen as well as phosphorous in a precise stoichiometric ratio to the dry fertilizer mix, it may be necessary to add additional phosphorous sources or nitrates or urea as additional nitrogen sources to alter the ratio provided by urea phosphate alone. A solid product of the invention will contain at least about 5% by weight (total solids) of urea phosphate which by itself will contribute about 2.5%w phosphorous (calculated as P₂O₅) and about 1%w nitrogen as N. The solid product can contain up to about 95% by weight of urea phosphate which would by itself contribute about 43%w phosphorous as P₂O₅ and about 17%w nitrogen as N. Higher P or N assays can be achieved by the addition of phosphorous sources or various nitrogen sources, such as urea or ammonium nitrate. The range of materials falling within the scope of this invention have phosphorous contents (as %w P₂O₅) of from about 2.5% to 44%, nitrogen contents (as %w N) of from 1% to 40% and potassium contents (as %w K₂O) of from 0% to 35%. Within these formulation ranges and parameters, it is desirable for the urea phosphate to be the primary or principal source of phosphorous in the present solid fertilizers. By "primary" or "principal" source is meant that urea phosphate contributes at least about 50%, and preferably at least about 95% and especially essentially 100% of the phosphorous present in these products. In cases where urea phosphate is not the sole phosphorous source, other phosphates such as potassium phosphate and ammonium phosphate can make up the balance.

In addition to the phosphorous and nitrogen and optional potassium, the materials of this invention include a trace metal being at least one metal selected from magnesium, iron, manganese, copper, boron, zinc and molybdenum.

Importantly, these materials are not provided as chelates, such as EDTA chelates or the like, but rather as simple salts, especially nitrates or sulfates.

In the case of boron, it may be supplied as boric acid. Molybdenum may be provided as an alkali metal or ammonium molybdate. Magnesium, although often present in higher concentration than typically associated with "trace metals" can be present as magnesium nitrate. This means that the following representative materials may be used in the products with minimal concern about precipitation or the like: magnesium nitrate, ferrous sulfate, ferrous nitrate, manganese sulfate, manganese nitrate, cupric sulfate, cupric nitrate, boric acid, zinc sulfate, zinc nitrate, sodium molybdate, ammonium molybdate and the like. In addition, the solid products can contain additional materials such as cofactors if desired.

These materials are mixed as solids, often with minor amounts of water as hydration and the like being present to allow a homogeneous product to be formed. The resulting products are dry solids as that term has been defined herein. They can be sold in bulk or they can be premeasured into units suitable for forming a standard volume of stock solution. In either case, it is often of advantage to distribute the materials in water-resistant packaging to minimize caking and lumping. Similarly, it may be of advantage to incude soluble inerts which are dyes, or which promote dispersion, prevent caking, or the like.

The solid products of this invention are made up into stock solutions by dissolving in water. This should be carried out in clean equipment usually with some agitation. Commonly, the stock solution contains from about 0.5 to about 5 lbs/gallon of dissolved solid (that is, from about 2% to about 40% by weight of dissolved solid). Preferably, the stock solution contains from about 5% to about 35% by weight of dissolved solid. This stock solution material is diluted by a factor of from 10 to 200 for application to the plants. This gives final concentrations which, for nitrogen, range from about 25 ppm up to about 450 ppm, with the other nutrients scaled accordingly.

The materials of this invention will be further described with reference to the following examples. These are provided to illustrate the practice of the invention and not to limit its scope which is defined by the appended claims.

### EXAMPLES

Three pairs of typical stock solutions were prepared using various combinations of nutrient sources, and the results differed depending on the source of phosphate. The nutrient sources included materials which are commonly used in the manufacture of water-soluble fertilizers. The most widely used source of phosphorous is monoammonium phosphate (MAP) which was compared with urea phosphate (UP) to determine differences in their effects on maintaining the solubility of all components of various compound fertilizer mixtures. In each pair, one was based on UP and the other on MAP. Some precipitates occurred in the MAP-based materials within the first 24 hours and after 30 days, the data in Table 1 were assembled.

### Conclusion

These results show that the use of monoammonium phosphate (MAP) in mixtures with magnesium nitrate, ferrous sulfate, manganese sulfate, copper sulfate and zinc sulfate does not maintain the solubility of these components in solution. This is in contrast to the use of urea phosphate (UP) which does maintain the solubility of these in solution consisting of these water soluble nutrient sources. These data show that the use of UP will permit magnesium nitrate and metal sulfates to be present in clear, concentrated stock solutions. This is a result that MAP, as a phosphorous source, is incapable of providing.

**TABLE 1**

| EFFECT OF UP ON ELIMINATING PRECIPITATION AS COMPARED TO MAP WHEN MIXED WITH TRACE METAL SULFATES | | |
|---|---|---|
| | Precipitate Occurred | No Precipitate Occurred |
| A. | 10 gr of MAP + 10 gr of ferrous sulfate/liter | 10 gr of UP + 10 gr of ferrous sulfate/liter |
| B. | 100 gr of MAP + 100 gr of ferrous sulfate/liter | 100 gr of UP + 100 gr of ferrous sulfate/liter |
| C. | 100 gr of MAP + 100 gr of ferrous sulfate + 30 gr of manganese sulfate + 10 gr of copper sulfate + 40 gr of zinc sulfate/liter | 100 gr of UP + 100 gr of ferrous sulfate + 30 gr of manganese sulfate + 10 gr of copper sulfate + 40 gr of zinc sulfate/liter |

These results show that one can provide solid compound fertilizers which can be successfully formed into stable stock solutions having weight compositions as follows:

| Phosphorous/micronutrient compound fertilizer | | | |
|---|---|---|---|
| | | | Preferably |
| Urea Phosphate | | 1 to 99% | 5 to 98% |
| Trace Metal Sulfates and Nitrates | | 0.1 to 50% | 1 to 40% |
| including | FeSO₄ | | |
| | MnSO₄ | | |
| | ZnSO₄ | | |
| | CuSO₄ | | |
| Other Fertilizer Materials | | 0 to 75% | 0 to 75% |

## Claims

1. A solid complex fertiliser for dissolving in water to give a water-based precipitate-free phosporous and trace metal containing stock solution, the solid complex fertiliser comprising
urea phosphate as the principal phospohorous source and nonchelated micro nutrient trace metal salt.

2. The solid complex fertiliser of claim 1 comprising:
1 to 99% by weight of urea phosphate and 0.1 to 50% by weight of micro nutrient trace metal salt.

3. The solid complex fertiliser of claim 1 or 2 comprising:
5 to 95% by weight of urea phosphate and 1 to 40% by weight of micro nutrient trace metal salt.

4. The solid complex fertiliser of claim 1, 2 or 3 wherein the nonchelated micro nutrient trace metal salt comprises a sulfate or nitrate of iron, copper, manganese or zinc.

5. The solid complex fertiliser of claim 3 or 4, additionally comprising magnesium nitrate.

6. A water-based precipitate-free fertiliser concentrate comprising the solid complex fertiliser of any preceding claim dissolved in water.

7. A water-based precipitate-free fertiliser concentrate according to claim 6, in which the solid complex fertiliser is from about 2% to about 40% by weight of the solution.

8. A water-based precipitate-free fertiliser concentrate according to claim 7, in which the solid complex fertiliser is from about 5% to about 35% by weight of the solution.
